Europäisches Patentamt

European Patent Office

Office européen des brevets

(11) Publication number: **0 389 266**
**A1**

# EUROPEAN PATENT APPLICATION

(21) Application number: **90303047.6**

(22) Date of filing: **21.03.90**

(51) Int. Cl.5: **C08L 67/02, C08K 3/22, C08K 9/00, G03C 1/795, G03C 1/95**

(30) Priority: **22.03.89 JP 69938/89**

(43) Date of publication of application:
**26.09.90 Bulletin 90/39**

(84) Designated Contracting States:
**DE GB NL**

(71) Applicant: **KONICA CORPORATION**
**No. 26-2, Nishishinjuku 1-chome Shinjuku-ku**
**Tokyo(JP)**

(72) Inventor: **Kiyohara, Kazuto, c/o Konica**
**Corporation**
**1, Sakuramachi**
**Hino-shi, Tokyo(JP)**
Inventor: **Araki, Hiromitu, c/o Konica**
**Corporation**
**1, Sakuramachi**
**Hino-shi, Tokyo(JP)**
Inventor: **Yamazaki, Toshiaki**
**No. 704, Mezon Fuchu, 1-36-5, Miyamachi**
**Fuchu-shi, Tokyo(JP)**
Inventor: **Harada, Ichiya, c/o Konica**
**Corporation**
**1, Sakuramachi**
**Hino-shi, Tokyo(JP)**

(74) Representative: **Ellis-Jones, Patrick George**
**Armine et al**
**J.A. KEMP & CO. 14 South Square Gray's Inn**
**London WC1R 5LX(GB)**

(54) White polyester composition and support for photography.

(57) Disclosed is a white polyester composition comprising a polyester containing a titanium dioxide, wherein the titanium dioxide has a crystallite size, measured by an X-ray method, of 540 Å or more, or a support for photography comprising a polyester layer composed of the polyester composition. Disclosed is also a white polyester composition comprising a polyester containing a titanium dioxide which contains niobium (Nb) in an amount of 0.3 % by weight or less in terms of $Nb_2O_5$, or a support for photography comprising a polyester layer composed of the polyester composition.

**White polyester composition and support for photography**

BACKGROUND OF THE INVENTION

This invention relates to a polyester composition and a support for photography, more particularly to a support for photography having a polyester layer comprising a polyester composition containing a titanium dioxide.

In photographic materials for direct observation of photographic images, as their supports (opaque supports), resin-coated raw papers (RC raw papers) have been generally used in the art, but in recent years, there have been also used white resin films opacified by filling with white pigments such as barium sulfate, titanium dioxide, etc. as disclosed in Japanese Patent Publications Nos. 4901/1981, 30930/1965, or Japanese Unexamined Patent Publication No. 118746/1986. Also, a film which has been made translucent with the amount of the white pigment being made small has been also used for light-sensitive materials for use in both the reflection type and the transmission type to be used particularly for display, etc.

However, of these supports, still no sufficient whiteness has been obtained for those by use of titanium oxides under the present situation.

Particularly, a white film comprising a polyester filled with a titanium dioxide as seen from the above-mentioned Japanese Unexamined Patent Publication No. 118746/1986 may be preferably used as the support for giving photographic images excellent in sharpness, but for giving sufficient opaqueness to such polyester filled with titanium dioxide, it is required to fill 10 % by weight or more of titanium dioxide. In the prior art, as the method for adding titanium dioxide into polyester, there are the method in which a slurry having titanium dioxide dispersed in a polyhydric alcohol such as ethylene glycol, etc. is added to a polyester polymerization system, and the method in which titanium dioxide is kneaded into a polyester polymer by means of a kneading machine such as biaxial kneader, etc. However, among these, in the above-mentioned polymerization system addition method, titanium dioxide tends to be precipitated by agglomeration in the polyhydric alcohol, and it is extremely difficult to add 10 % by weight or more of titanium dioxide to the polymer which have been completely polymerized. Further, in said method, the surface of said titanium dioxide is required to have hydrophilicity for dispersing titanium dioxide into the polyhydric alcohol, but because the polyester polymer has no such hydrophilicity, titanium dioxide tends to be agglomerated in the polymer. Such agglomeration of titanium dioxide may cause undesirably breaking during film fabrication, or generate unevenness in the film fabricated. Therefore, as the method for adding titanium dioxide to the polyester, the above-mentioned polymer kneading method which can fill a large amount of titanium dioxide with good dispersibility has been preferably used.

SUMMARY OF THE INVENTION

However, the polyester composition filled with titanium dioxide obtained by the above-mentioned kneading method, while being excellent in dispersibility of titanium dioxide, has been still insufficient with respect to whiteness. The present inventors have made various investigations, and consequently found the following fact.

There have been well known, in paints and plastics which were filled with titanium dioxide, that the whiteness intimately relates with the mean particle size of the titanium dioxide and that preferred whiteness cannot be obtained when the mean particle size is too small or large.

However, there is remarkable difference in the whiteness of the titanium oxides even if these have the same mean particle sizes. This is because the mean particle size conventionally measured was determined according to the sedimentation method or the electro microphotography method and thus was apparent value. What has an effect to the whiteness virtually is a crystallite size determined according to Sherer's formula from a half value width of X-ray diffraction peak. The half value width referred here is the width of spectral at a half height of the X-ray diffraction peak. Also, the above-mentioned crystallite size tends to be affected by niobium Nb content in the titanium dioxide.

The present invention was aimed, in view of the above conventional problems, to provide a white polyester composition and a support for photography comprising a polyester layer composed of said composition to have sufficient whiteness.

The object of the present invention can be accomplished by a white polyester composition comprising a polyester containing a titanium dioxide which has a crystallite size, measured by an X-ray method, of 540 Å or more, or a support for photography comprising a polyester layer composed of said polyester composition.

The object of the present invention can also be accomplished by a white polyester composition comprising a polyester containing a titanium dioxide which contains niobium (Nb) in an amount of 0.3 % by weight or less in terms of $Nb_2O_5$, or a support for photography comprising a polyester layer composed of said polyester composition.

The object of the present invention can be preferably accomplished by a white polyester composition comprising a polyester containing a titanium dioxide which has a crystallite size, measured by the X-ray method, of 540 Å or more, and contains niobium (Nb) in an amount of 0.3 % by weight or less in terms of $Nb_2O_5$, or a support for photography comprising a polyester layer composed of said polyester composition.

More preferably, the object of the present invention can be accomplished by a support for photography comprising a film, of the above composition, formed by melt extrusion molding and biaxial stretching, or a support for photography comprising a laminate constitution of two or more layers.

## DESCRIPTION OF THE PREFERRED EMBODIMENTS

The titanium dioxide to be used in the present invention may be either one of the rutile type and the anatase type. Alternatively, these may be used in combination. The anatase type may preferably be used.

The titanium dioxide used in the present invention has a crystallite size of 540 Å or more, preferably 540 Å or more and not more than 600 Å. If the crystallite size is less than 540 Å, the whiteness is insufficient, and if exceed 600 Å, the sizes of particles each are sometimes uneven and also sometimes involves difficulty in industrial production.

The titanium dioxide used in the present invention contains Nb in an amount of 0.3 % by weight or less in terms of $Nb_2O_5$. If the Nb content is more than 0.3 % by weight, crystalline growth of the titanium dioxide tends to be inhibited and thus those having large crystallite size cannot be obtained. Also, Nb functions as a light absorbing impurities and thus it is preferable to contain Nb as small as possible.

The titanium dioxide of the present invention may preferably be surface treated before addition to the polyester. The surface treatment is carried out by use of inorganic material or organic material. The inorganic surface treatment in the present invention refers to coating of the titanium dioxide particle surface with, for example, either one or both of an aluminum compound and a silicon compound. As the aluminum compound, for example, aluminum hydroxide may be employed, while as the silicon compound, for example, silicon hydroxide may be generally employed.

Though the inorganic surface treatment method is not particularly limited, for example, the method in which titanium dioxide is emulsified in an aqueous solution of sodium aluminate and then the pH of the system is raised to precipitate aluminum hydroxide on the surface of titanium dioxide, etc. can be employed.

The organic surface treatment in the present invention refers to coating of the titanium dioxide particle surface with an organic material. As such organic material, aliphatic acid metal salts, surfactants, coupling agents, alcohols, silicone oils, etc. may be employed, but those containing silicon are preferable, for example, siloxane polymers, particularly polydimethylsiloxane. As such siloxane polymers, those represented by the formula:

$$-(SiR_1R_2-O)_n-$$

($R_1$ and $R_2$ each represent hydrogen atom or an alkyl group having 1 to 8 carbon atoms, and n represents an integer of 2 or more) are preferred. The method of the organic surface treatment is not particularly limited, but, for example, the titanium dioxide and the polydimethylsiloxane are stirred simultaneously by use of Henschel mixer to make the polydimethylsiloxane adhered on the surface of the titanium dioxide.

The content of the titanium dioxide in the polyester is not particularly limited, but the effects of the present invention can be obtained markedly when it is contained in an amount of 10 % by weight or more. Of course, it can be also used in an amount less than 10 % by weight.

Also, in the present invention, for making the surface of the film obtained smooth, it is preferable to classify the coarse particles having particle sizes of 3 μm or more. Classification may be performed either by the dry system or by the wet system. As the dry system, for example, a classifier such as Turbo Classifier (Nisshin Engineering K.K.) may be preferably employed, while the levigation method as the wet system.

As the polyester in the present invention, there may be included polymers of condensates of aromatic dicarboxylic acids such as terephthalic acid, isophthalic acid, phthalic acid, naphthalene dicarboxylic acid, etc., with glycols such as ethylene glycol, 1,3-propane diol, 1,4-butane diol, etc., for example, polyethylene terephthalate, polyethylene 2,6-dinaphthalate, polypropylene terephthalate, polybutylene terephthalate, etc. or copolymers of these, particularly preferably polyethylene terephthalate (hereinafter, abbreviated to PET). PET resin films do not permit water to permeate therethrough, having excellent smoothness, excellent mechanical characteristics such as tensile strength, bursting strength, etc., excellent dimensional stability such as heat shrinkage, etc., and further excellent chemical resistance during developing processing.

The polyester to be used in the present invention should preferably have an intrinsic viscosity of 0.4 to 1.0, more preferably 0.5 to 0.8, as measured at 20 °C in a solvent mixture of phenol/tetrachloroethane (60/40 weight ratio).

The support for photography of the present invention may be either one layer or a laminate of two or more layers as long as it comprises at least one resin layer containing titanium dioxide according to the present invention. Such laminate may be formed by laminating resin films each other or coating on a paper.

The thickness of the resin film containing titanium dioxide is not particularly limited, but the support should preferably have a thickness of 50 to 300 $\mu$m, more preferably 75 to 250 $\mu$m. If the thickness is too thin, the nerve as the support is weak to readily form wrinkles, while if it is too thick, such shortcoming as inconvenient handling, etc. may be caused to occur.

For example, by adding the titanium dioxide in an amount of 10 % by weight or more, and making the film thickness about 180 $\mu$m, sufficient opaqueness as the support for print can be obtained. Also, by making the amount of the titanium dioxide added about 1 % by weight, and the film thickness about 180 $\mu$m, the film becomes translucent to give a support for a light-sensitive material for use in both the reflection type and the transmission type. Further, by adding the titanium dioxide into a polyester in an amount of about 30 % by weight, making the film thickness about 30 $\mu$m and laminating the film onto a transparent film, the resultant laminate can be used as the support for photography.

The white polyester film may also be obtained by laminating a polyester containing titanium dioxide in an amount of about 30 % by weight onto a biaxially extruded polyester film. In this instance, of course, two or more layers of the polyester containing titanium dioxide may be laminated.

In the present invention, the titanium dioxide can be used in combination with one or two or more kinds of inorganic pigments generally used as white pigments in this field of the art, such as zinc oxide, barium sulfate, silica, talc, calcium carbonate, etc. However, these white pigments which can be used in combination should not exceed 10 parts by weight based on 100 parts by weight of the polyester of the present invention.

In the present invention, kneading of the titanium dioxide into the polyester may preferably be performed under the molten state of the polyester.

In the present invention, as the kneading machine for kneading and dispersing the titanium dioxide in the polyester, there may be employed extruders having rotor or blade for kneading, co-directional or counter-directional rotation type biaxial kneading extruders, continuous kneading machines such as monoaxial type continuous kneaders, etc., or batch system kneading machines such as three rolls, Banbury mixers, Henschel mixers, kneaders. Among them, since kneading can be performed continuously while applying strong shearing force, co-directional rotation type continuous biaxial kneading machines may be preferably used.

In the present invention, the polyester composition obtained by the above-mentioned kneading may be once formed into pellets before provided for film molding, or alternatively provided under the molten state as such for film molding. Also, in either method, molding may be conducted with the pigment concentration as such, or a composition with higher pigment concentration, namely the so-called master batch may be prepared, and this may be diluted before molding.

For film molding, the polyester composition obtained by kneading may be extruded under the molten state through a slit die, allowed to contact a quenched surface of a rotatory drum, etc. to form an amorphous sheet and stretched successively in monoaxial direction of the longitudinal or lateral direction or biaxially at the same time at a temperature range from the glass transition temperature (Tg) of the polyester of the present invention to 130 °C. In this case, for satisfying the mechanical strength and the dimensional stability of the film support, stretching should be preferably performed at an area ratio ranging from 4 to 16-fold, more preferably from 6 to 12-fold. Subsequent to stretching, thermal fixing and thermal relaxation may be preferably effected. Also, during film fabrication, it is preferable to perform filtration with a filter of appropriate grade.

In the film support of the present invention, other additives conventionally used, such as fluorescent brighteners, dyes, UV-ray absorbers, antistatic agents, etc. can be contained within the range which does not impair the object of the present invention.

On the support for photography of the present invention which has been molded and made opaque and white as described above, photography constituting layers containing at least one light-sensitive silver halide photographic emulsion layer is provided by coating to prepare a light-sensitive photographic material. In this case, if necessary, prior to coating of the light-sensitive silver halide photographic emulsion, a surface activation treatment such as corona charging, etc. may be applied and/or a subbing layer may be provided by coating.

As the coating method of the light-sensitive silver halide photographic emulsion layer, extrusion coating and curtain coating which can coat two or more layers at the same time are particularly useful. Also, the coating speed can be chosen as desired, but a speed of 50 m/min. or faster is preferable in productivity.

The support for photography of the present invention is applicable to all of the photographic elements using opaque or translucent support, and is not limited in use such as for black-and-white or for color, etc. It is applicable also in photography constituting layers such as light-sensitive silver halide photographic emulsion layer, intermediate layer, protective layer, filter layer, back coat layer, etc. without particular limitation of layer number and layer order.

The light-sensitive silver halide photographic emulsion layers in the present invention are various conventional silver halide emulsion layers and, for example, silver chloride, silver bromide, silver chlorobromide, silver iodobromide, silver chloroiodobromide emulsions, etc. can be preferably used. Also, in said photographic emulsion layer, a coupler for making a color image can be also contained, and as the binder, gelatin and hydrophilic polymeric substances other than gelatin, such as polyvinyl alcohol, polyvinyl pyrrolidone, etc. can be also contained. Further, the above-mentioned silver halide emulsion layer can be also sensitized in the light-sensitive wavelength region with cyanine dyes, melocyanine dyes, etc., and also other various additives for photography, for example, chemical sensitizers by use of gold, sulfur, etc., antifoggants, film hardeners, antistatic agents, etc. can be preferably added. Therefore, either black-and-white developing processing or color developing processing may be applicable to the photographic material using the white composition or the support of the present invention.

Examples

The present invention is described in detail below by referring to Examples, but the present invention is not limited by these embodiments at all.

It has been generally known that titanium dioxide in Europe is less in Nb content and that in Southeast Asia is rich in Nb content. Therefore, crude ores of Europe and Southeast Asia were mixed in an appropriate amount to use, and the titanium oxides having different Nb contents were prepared according to the sulfuric acid method. In this instance, the temperatures during the steps for calcining the hydrated titanium oxides to titanium oxides were varied to prepare titanium oxides having different crystallite sizes.

Properties of titanium dioxide samples Nos. 1 to 12 are shown in Table 1.

Twenty (20) parts by weight of each titanium dioxide thus obtained and 80 parts by weight of polyethylene terephthalate having an intrinsic viscosity of 0.80 were melt kneaded by a co-directional rotation type biaxial screw kneading extruder ZCM 53/60 (manufactured by Automatic Co.,) and then pelletized.

The pellets obtained were vacuum dried at 180 °C for 6 hours and then molded into plates of 2 mm thick, 40 mm x 60 mm (depth and width) by an injection molding machine respectively.

The whiteness of these plates Nos. 1 to 12 were measured. The results are also shown in Table 1.

(Measurement methods)

Mean particle size

Five (5) grams of $TiO_2$ were added to 250 ml of water and thoroughly stirred to prepare an suspension. The suspension was subjected to the measurement of a mean particle size by using a centrifugal sedimentation particle size analyzer CAPA-500 manufactured by Horiba Seisakusho.

Crystallite size

The crystallite size was determined by measuring the half value width of the diffraction peak (the width at the half height of the peak) of 101 face for an anatase type and 110 face for a rutile type by using a powder X-ray diffraction machine (manufactured by K.K. Rigaku) and calculating according to the following formula.

$$D = \frac{0.9 \, \lambda}{B \, \cos \, \theta}$$

D: Crystallite size (Å), $\theta$: Angle of diffraction
$\lambda$: Wavelength of X-ray (Å), B: Half value width (radian)

Nb content

The Nb content in terms of $Nb_2O_5$ was determined by use of a calibration curve which has been previously prepared by using $TiO_2$ of which the Nb content in terms of $Nb_2O_5$ was known by using a fluorescent X-ray analyzer manufactured by K.K. Rigaku.

Whiteness

The whiteness was measured by use of a plate which was extrusion molded. Spectral reflectance was measured by using a color analyzer 607 manufactured by Hitachi Seisakusho K.K. From the measured spectral reflectance, the Lab values thereof was determined by Hunter's color difference formula in the visual field forming a solid angle of 2 degrees by use of a C-light source (Standard Light C) referring to JIS-Z-8722. The L value thereof was referred to the whiteness.

Table 1

| Plate No. | $TiO_2$ Sample No. | Shape of crystal | Mean particle size ($\mu$m) | Crystallite size (Å) | $Nb_2O_5$ content (%) | Whiteness | Remarks |
|---|---|---|---|---|---|---|---|
| 1 | 1 | anatase type | 0.23 | 476 | 0.47 | 86.7 | Comparative |
| 2 | 2 | anatase type | 0.23 | 504 | 0.48 | 87.4 | Comparative |
| 3 | 3 | anatase type | 0.23 | 528 | 0.43 | 87.6 | Comparative |
| 4 | 4 | anatase type | 0.23 | 535 | 0.35 | 88.1 | Comparative |
| 5 | 5 | anatase type | 0.23 | 528 | 0.13 | 89.3 | Invention |
| 6 | 6 | anatase type | 0.23 | 545 | 0.25 | 89.4 | Invention |
| 7 | 7 | anatase type | 0.23 | 549 | 0.13 | 89.5 | Invention |
| 8 | 8 | anatase type | 0.23 | 562 | 0.13 | 91.2 | Invention |
| 9 | 9 | anatase type | 0.23 | 572 | 0.01 | 91.0 | Invention |
| 10 | 10 | anatase type | 0.23 | 578 | 0.43 | 90.6 | Invention |
| 11 | 11 | anatase type | 0.23 | 584 | 0.13 | 91.2 | Invention |
| 12 | 12 | rutile type | 0.20 | 545 | 0.00 | 92.3 | Invention |

The pellets obtained were each vacuum dried at 180 °C for 6 hours, and melted together with 500 ppm of a fluorescent brightener Lucopur EGM (Sand Co.) in an extruder, then extruded through a slit die onto a quenched rotary drum to be formed into an amorphous sheet with a film thickness of 1.4 mm, subsequently stretched at 95 °C to 2.6-fold in the longitudinal direction, further at 110 °C to 3.0-fold in the lateral direction, followed by thermal fixing at 210 °C and cooling, to obtain a white opaque film support with a thickness of 180 $\mu$m. The whole visible light transmittances of these films were found to be all about 5.0 % and thus sufficiently opaque.

This film was coated with a subbing layer comprising a ternary copolymer of styrene-butadiene-maleic anhydride, then subjected to corona discharging, and a gelatin-silver halide photographic emulsion conventionally used for color photographic printing paper was coated thereon to a dry film thickness of 15 $\mu$m, to prepare reflective photographic light-sensitive materials.

The light-sensitive materials obtained were printed with images from the side of a negative film to obtain prints.

Among these prints, the light-sensitive materials for comparison using TiO$_2$ samples Nos. 1 to 4 appeared to be wholly dark blue, particularly smoky in the white background. On the contrary, the light-sensitive materials of the present invention using TiO$_2$ samples Nos. 5 to 12 appeared to be wholly light, particularly bright in the white background. However, the light-sensitive materials using TiO$_2$ sample No. 12 was slightly yellowish.


Example 2

Forty (40) parts by weight of TiO$_2$ samples Nos. 1 to 12 prepared in Example 1 were each melt kneaded with 60 parts by weight of polybutylene terephthalate resin by using the above-mentioned ZCM 53/60, and pelletized.

The thus obtained pellets were each mixed with polybutylene terephthalate resin pellets in the proportion of 1:1 and vacuum dried at 130 °C for 4 hours, followed by molding into a plate by use of an injection molding machine.

The whiteness of these plates Nos. 21 to 32 were measured. The results are shown in Table 2.

Table 2

| Plate No. | TiO$_2$ Sample No. | Whiteness | Remarks |
|---|---|---|---|
| 21 | 1 | 87.6 | Comparative |
| 22 | 2 | 88.3 | Comparative |
| 23 | 3 | 88.5 | Comparative |
| 24 | 4 | 88.6 | Comparative |
| 25 | 5 | 90.1 | Invention |
| 26 | 6 | 90.2 | Invention |
| 27 | 7 | 90.5 | Invention |
| 28 | 8 | 91.9 | Invention |
| 29 | 9 | 91.8 | Invention |
| 30 | 10 | 91.8 | Invention |
| 31 | 11 | 92.1 | Invention |
| 32 | 12 | 92.9 | Invention |

These pellets obtained were each vacuum dried at 130 °C for 4 hours, melted together with 500 ppm of a fluorescent brightener Lucopur EGM (Sand Co.) in an extruder, then extruded through a slit die, and each laminated to 30 $\mu$m thickness onto polyethylene terephthalate films containing 3 % by weight of TiO$_2$ with a thickness of 180 $\mu$m.

These films were coated with a subbing layer comprising a ternary copolymer of styrene-butadiene-maleic anhydride, then subjected to corona discharging, and a gelatin-silver halide photographic emulsion conventionally used for color photographic printing paper was coated thereon to a dry film thickness of 15 $\mu$m, to prepare reflective photographic light-sensitive materials.

The light-sensitive materials obtained were printed with images from the side of a negative film to obtain prints.

Among these prints, the light-sensitive materials for comparison using TiO$_2$ samples Nos. 1 to 4 appeared to be wholly dark blue, particularly smoky in the white background. On the contrary, the light-sensitive materials of the present invention using TiO$_2$ samples Nos. 5 to 12 appeared to be wholly light, particularly bright in the white background. However, the light-sensitive material using TiO$_2$ sample No. 12 was slightly yellowish.

As is apparent from these results, the white polyester composition and the support for photography using said composition and having sufficient whiteness can be obtained according to the present invention.

**Claims**

1. A white polyester composition comprising a polyester containing a titanium dioxide, said titanium dioxide having a crystallite size, measured by an X-ray method, of 540 Å or more.

2. The white polyester composition according to Claim 1, wherein the crystallite size of the titanium dioxide is 540 Å or more and not more than 600 Å.

3. The white polyester composition according to Claim 1, wherein said titanium dioxide contains niobium (Nb) in an amount of 0.3 % by weight or less in terms of $Nb_2O_5$.

4. The white polyester composition according to Claim 1, wherein the titanium dioxide is surface treated by use of inorganic material or organic material before addition to the polyester.

5. The white polyester composition according to Claim 4, wherein the inorganic material is at least one of an aluminum compound and a silicon compound.

6. The white polyester composition according to Claim 5, wherein the inorganic material is at least one of an aluminum hydroxide and a silicon hydroxide.

7. The white polyester composition according to Claim 4, wherein the organic material is at least one selected from the group consisting of aliphatic acid metal salts, surfactants, coupling agents, alcohols and silicone oils.

8. The white polyester composition according to Claim 7, wherein the organic material is siloxane polymers represented by the formula:

$$-\!\!\left(SiR_1R_2\text{-}O\right)_{\!\overline{n}}-$$

where $R_1$ and $R_2$ each represent hydrogen atom or an alkyl group having 1 to 8 carbon atoms, and n represents an integer of 2 or more.

9. The white polyester composition according to Claim 8, wherein the organic material is polydimethylsiloxane.

10. The white polyester composition according to Claim 1, wherein the polyester is at least one selected from the group consisting of polymers of condensates of aromatic dicarboxylic acids with glycols and copolymers of these,

11. The white polyester composition according to Claim 10, wherein the aromatic dicarboxylic acids is at least one selected from the group consisting of terephthalic acid, isophthalic acid, phthalic acid and naphthalene dicarboxylic acid and the glycols is at least one selected from the group consisting of ethylene glycol, 1,3-propane diol and 1,4-butane diol.

12. The white polyester composition according to Claim 1, wherein the polyester is at least one selected from the group consisting of polyethylene terephthalate, polyethylene 2,6-dinaphthalate, polypropylene terephthalate and polybutylene terephthalate.

13. The white polyester composition according to Claim 12, wherein the polyester is polyethylene terephthalate.

14. A white polyester composition comprising a polyester containing a titanium dioxide which contains niobium (Nb) in an amount of 0.3 % by weight or less in terms of $Nb_2O_5$.

15. A support for photography comprising a polyester layer containing a titanium dioxide, said titanium dioxide having a crystallite size, measured by an X-ray method, of 540 Å or more.

16. The support for photography according to Claim 15, wherein said titanium dioxide contains niobium (Nb) in an amount of 0.3 % by weight or less in terms of $Nb_2O_5$.

17. The support for photography according to Claim 15, wherein said support is a film formed by melt extrusion molding and biaxial stretching.

18. The support for photography according to Claim 17, wherein the biaxial stretching was performed successively in monoaxial direction of the longitudinal or lateral direction or biaxially at the same time, at a temperature range from the glass transition temperature (Tg) of the polyester to 130 °C.

19. The support for photography according to Claim 17, wherein the biaxial stretching was performed at an area ratio ranging from 4 to 16-fold, followed by thermal fixing and thermal relaxation.

20. The support for photography according to Claim 17, wherein the biaxial stretching was performed at an area ratio ranging from 6 to 12-fold, followed by thermal fixing and thermal relaxation.

21. The support for photography according to Claim 15, wherein said support has a laminate constitution of two or more layers.

22. A support for photography comprising a polyester layer containing a titanium dioxide which contains niobium (Nb) in an amount of 0.3 % by weight or less in terms of $Nb_2O_5$.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 292 120 (KONICA CORP. et al.) * Page 4, lines 16-19 * | 1,15 | C 08 L 67/02 |
| Y | | 22 | C 08 K 3/22 |
| | --- | | C 08 K 9/00 |
| A | PATENT ABSTRACTS OF JAPAN, vol. 13, no. 221 (C-598)[3569], 23rd May 1989; & JP-A-01 31 858 (UNITIKA LTD) 02-02-1989 * Abstract * | 1,2,4 | G 03 C 1/795 G 03 C 1/95 |
| Y | IDEM --- | 14 | |
| A | FR-A-1 230 124 (IMPERIAL CHEMICAL INDUSTRIES LTD) * Table; page 3, examples 4-8 * --- | 1,14 | |
| X | EP-A-0 133 141 (RHONE-POULENC FILMS) * Page 8, line 4 * --- | 14 | |
| Y | FR-A-1 570 119 (MIZUSAWA K.K.) * page 9, lines 29-44; figures 1-2 * ----- | 14,22 | |

TECHNICAL FIELDS SEARCHED (Int. Cl.5)

C 08 K
C 08 L
G 03 C
C 01 G

The present search report has been drawn up for all claims

| Place of search | Date of completion of the search | Examiner |
|---|---|---|
| THE HAGUE | 09-05-1990 | SCHUELER D.H.H. |